# EUROPEAN PATENT SPECIFICATION

(11) **EP 2 351 490 B1**
(45) Date of publication and mention of the grant of the patent: **17.10.2018**
(21) Application number: 10151772.0
(22) Date of filing: 27.01.2010
(51) Int. Cl.: A23G 1/10, A23G 1/12, A23G 1/00, B65G 33/00

(54) **A device and a process for continuously feeding chocolate ingredients as well as a system and a process for producing a chocolate mass**
Vorrichtung und Verfahren zur durchgehenden Zufuhr von Schokoladenzutaten und System und Verfahren zur Herstellung von Schokoladenmasse
Dispositif et procédé pour l'alimentation en continu d'ingrédients au chocolat, système et procédé de fabrication d'une masse de chocolat

(43) Date of publication of application: 03.08.2011
(73) Proprietor: Kraft Foods R & D, Inc., Deerfield, IL 60015 (US)
(72) Inventor: Bernauer, Hans-Peter, 85551 Kirchheim (DE); Brandstetter, Bernhard, 84453 Muehldorf (DE); Eichler, André, 81549 Munich (DE); Hecht, Gerhard, 87600 Kaufbeuren (DE); Pfeifer, Jochen, 82377 Penzberg (DE); Schleppe, Anja, 85579 Neubiberg (DE); Suess, Martina, 80801 Munich (DE); Simbürger, Stephan, 81375 Munich (DE)
(74) Representative: Wilson Gunn

(56) References cited:
- WO-A1-02/075260
- CH-A- 235 556
- CH-A- 291 175
- DE-A1- 1 945 615
- GB-A- 2 400 592
- US-A- 2 711 964
- US-A- 4 945 957
- US-A- 5 160 016
- US-A- 5 351 609

## Description

### Technical field

The invention relates to a device and a process for continuously feeding chocolate ingredients to a continuous conche as well as a system and a process for producing a chocolate mass.

In the field of chocolate making, conches are known which are normally operated in a batch-wise manner. In other words, the conche is filled with the ingredients, is operated for a certain time and as a result of the process, chocolate mass can be taken from the conche after finishing the operation.

### Background art

Further, continuous conches having one or more screws have been proposed, for example, by US 4 679 498.

US 5,351,609 A discloses a continuously operating conching machine which is divided into a plurality of compartments divided by at least one partition wall. The transfer of the materials from one compartment to the next being effected via at least one opening in the particular partition wall. To avoid adhering of chocolate mass to the walls of a tube balance, the walls are inclined obliquely downward.

CH 235 556 discloses a conching machine with a container and a stirring device, The arms of the stirring device have cavities. The walls of the container and the arms can be enamelled.

US4945957 discloses a device for feeding powders which includes at least one inflatable pad on the top edge of a hopper which is utilised to control the density of material fed to an auger.

### Summary of the invention

One of the problems solved by the invention is to contribute to a device and process for an efficient production of chocolate mass by a continuous conche. The device solving these and other problems is described in claim 1, and the related process is detailed in claim 13. Specific embodiments are given in the dependent claims. The system having a device as described herein and the process for producing a chocolate mass incorporating the process described herein are described in claims 12 and 19, respectively.

The invention is to some extent based on the finding, but not limited thereto, that a continuous flow of, for example, 1500 - 2500 kg/h of the ingredients for forming a chocolate mass, such as the so-called flakes, is essential for allowing efficient and reliable production of chocolate mass in a continuous conche. The mentioned flakes mainly consist of sugar, cocoa butter, cocoa liquor and cocoa powder which have been ground and refined as is well known to those skilled in the art. Further, particularly for the manufacture of milk chocolate, the cocoa powder may partially or fully be replaced by milk powder which may comprise sweet whey powder and milk fat. Further, for the manufacture of white chocolate, cocoa liquor may be omitted. Usually, the described flakes are warm. It is noted that the features described herein are applicable to any chocolate or chocolate-like material which may be called chocolate under local laws. In particular, chocolate-like materials may comprise any food materials derived from the cocoa bean and any confectionery material having fat. As regards the continuous conche, as described herein, this conche may have one or more shafts having a helical structure at their periphery, such as a spindle or a screw. One or more spindles may be intermeshing with other spindles, and the continuous conche may be provided as an extruder, particularly a planetary roller extruder. Such an extruder may, for example, be manufactured by ENTEX Rust & Mitschke GmbH, Heinrichstrasse 67, 44805 Bochum, Germany. For the mentioned types of continuous conches, it has been found that they advantageously provide the required (high) heat transfer to the ingredients, the necessary mixing and shearing thereof, in order to produce a homogeneous chocolate mass in a continuous, highly efficient process. In particular, the conching time, i.e. the time which the ingredients spend in the conche before they have turned to chocolate mass, can be reduced from several hours to only a few minutes. Further, the space required for the above-described continuous conche is significantly less than that of traditional (batch) conches, so that efficiency of the process is improved also in this regard. This particularly applies when the amount of chocolate mass obtained is taken into account. Traditional conches may produce between 5 and 12 tons of chocolate mass per day, whereas the above-described continuous conches allow the production of 2 to 3 tons per hour, and even more depending on their size.

As indicated above, the feeding of the ingredients to a continuous conche leads to specific requirements. In particular, the inventors have found out that reliability of the described process can be significantly improved if the ingredients are continuously supplied, e.g. by being prevented from adhering to the surfaces of the device exposed to the ingredients. As will be detailed below, there are several occasions and locations where the ingredients tend to adhere or stick to the surfaces of the device. Depending on the specific situation and process parameters, the locations require different measures for preventing the ingredients from adhering. In particular, the inventors found that there are situations in which the application of adhesion preventions means at one particular location is sufficient for ensuring a steady feeding of ingredients, so that the invention may be realized in this manner. Moreover, several measures to prevent adhesion can be combined with each other. In particular, the device described herein may have one or more conveyors, one or more buffer tanks, one or more feeding devices, such as pistons or screws including a casing and one or more hoppers, substantially provided in a screw casing in order to feed the ingredients to the feeding screw, for example, by a conveyor. One or more of the conveyors may be provided by Bühler AG, 9240 Uzwil, Switzerland and/or BSA Schneider Anlagentechnik GmbH, Grüner Winkel 7-9, 52070 Aachen, Germany and/or Petzholdt-Heidenauer Maschinen- und Anlagenbau International GmbH, Niedersedlitzer Straße 41, 01239 Dresden, Germany. One or more buffer tanks may have a size of about 800 litres and may be manufactured by Reimelt Foodtechnologie GmbH, Messenhäuser Straße 37-45, 63322 Rödermark, Germany. Further, the lower part of the buffer tank may have an inclination angle of about 40°. This has proven to provide a reliable flow of the ingredients. This is further supported if the inner surfaces of at least one buffer tank are at least partially Teflon coated or provided with a surface which assists in preventing adhesion of the ingredient to the surfaces of the buffer tank in any other manner. One or more feeding screws may have a total length of about 0,4m, with about 0,3m being provided with a helical, screw-type structure to provide a conveying or feeding effect, and the remainder of the screw being provided, for example, with a type of pulley for driving same. The inner diameter of one or more feeding screws may be about 10,5cm and the outer diameter may be about 15,5cm. Further, the pitch length may be about 15cm. Finally, one or more feeding screws may be manufactured by Entex, mentioned above with regard to the extruder. This also applies to one or more hoppers which may further have at least one lower opening which is substantially rectangular with a length of about 17cm and a width of about 10cm. The upper opening may a length of about 29cm and a width of about 22cm. Further, the height of a conical part of the hopper may be about 24cm, and the height of a lower part having substantially vertical walls may be about 9cm. It is noted that any of these specific dimensions mentioned above or below are, as the skilled person will appreciate, dependent on the type and/or dimensions of the surrounding components.

As detailed below, an adhesion prevention means described herein, is provided at the or each hopper.

For example, in numerous experiments the inventors have found out that the ingredients tend to stick and even build so-called bridges at the interface of a feeding screw, feeding the ingredients to the continuous conche, and one or more openings where the ingredients are fed to the feeding screw. At this interface at least one hopper is provided into which the ingredients are deposited by at least one conveyor. In order to prevent the ingredients from adhering to the walls of the hopper and/or the casing of the screw, at least one flexible wall is provided in the hopper and/or the casing. The at least one flexible wall representing a relatively simple and efficient mechanical measure, may be moved and/or deformed frequently to destroy any "bridges" or buildups of ingredients which have the potential of impairing the continuous feeding of ingredients to the continuous conche. The flexible wall may, for example, be made of polyurethane (PU) or any other material which is deformable under the conditions which are present in the surroundings of the devices described herein. Further, one or more level sensors may be provided in the above-mentioned hopper in order to provide an automatic monitoring of the filling situation at the hopper and control the process appropriately based on this information.

In the experiments conducted, the inventor experienced very good results, particularly with at least one wall moving and/or inflating means. These wall moving means may, for example, be provided as one or more pneumatically operated pistons, for example, manufactured by Festo AG & Co. KG, Ruiter Str. 82, 73734 Esslingen-Birkheim, Germany. In other words, one or more wall or section thereof may be provided as a flexible wall by being movable with respect to at least one adjacent wall. This provides the above described advantageous effect of destroying bridges or buildups. This also applies to the inflating means. In this case, one or more walls are provided as flexible walls and part of an inflatable area. Thus, this area or space may be inflated frequently in order to move and/or deform the flexible wall, so that, also in this case, any buildups of chocolate ingredients are caused to fall to an area where they can be conveyed further, e.g. by the feeding screw.

The above measures may or may not be combined with at least one surface exposed to the ingredients which is not adhesive to cold or warm chocolate ingredients. Thus, any surfaces, in particular also those of a conveyor and/or a feeding screw are provided to prevent adhesion of ingredients.

As experiments have shown, this may, for example, be achieved by providing the exposed surfaces with a low surface roughness, for example about Ra=1,0 µm or less.

Further, good results have been achieved with surfaces which may be ceramic surfaces and/or lacquered, e.g. with hybrid lacquer which may for example be supplied by Zion Zentrum fur Oberflächenveredelung & Nanotechnologie, Karl Arnold Str. 5, 47877 Willich, Germany or European Surfaces Technologies GmbH, Dr. Alfred Herrhausen Allee 16, 47228 Duisburg, Germany under the trademark "HBL Hybrid Lack" and/or teflonized surfaces and/or electroplated, for example with chrome, surfaces. In other words, one or more surfaces, particularly of one or more screws may be coated with PTFE. Teflon coating has also proven efficient in connection with the inner surfaces of the buffer tank described below. Further, as regards, for example, a feeding screw, sintered stainless steel material has proven beneficial as a base material of the feeding screw. Also, one or more surfaces may be provided with a coating and/or a surface based on nanotechnology in order to achieve the adhesion prevention effect.

The inventors also found that particular design measures of the equipment involved are beneficial for preventing the adhesion of chocolate ingredients. For example, at least one feeding screw may have a ratio of its pitch length (L) to its outer diameter (D) of about 3 to about 1. In this range, and especially with a L/D ratio of about 1, good results have been obtained with regard to the prevention of adhesion and ensuring continuous feeding of the ingredients.

Moreover, the device may have at least one buffer tank in order to cope with any adhesion of chocolate ingredients which can only be removed from time to time. In other words, it may be beneficial to buffer the ingredients in order to harmonize a flow of ingredients to the buffer which might be interrupted, possibly because of adhesion, from time to time. Further, the chocolate ingredients, in particular chocolate flakes, are typically supplied from one or more refiners, which do not always guarantee a constant continuous flow of ingredients. Consequently, this flow can be harmonized by one or more buffer tanks. Further, the provision of one or more buffer tanks may aid in securing a continuous flow of chocolate ingredients as follows. It has been found quite unexpectedly that adhesion of chocolate ingredients occurs when the flow of ingredients is interrupted. In other words, a continuous flow of ingredients may prevent the ingredients from adhering to any of the exposed surfaces, whereas whenever there is an interruption in the flow of ingredients, i.e. when the ingredients stay at a particular place contacting the exposed surface for a somewhat longer time period, adhering and sticking occurs. Since a buffer may compensate any discontinuities in the flow, a steady flow of the ingredients from the buffer can be achieved, and adhesion of ingredients downstream of the buffer can advantageously be minimized.

In order to prevent adhesion in the buffer, particularly in the buffer tank itself, it has proven efficient to provide at least one agitator means, such as vane-type stirrer, an agitator or a Kokeisl stirrer, for stirring the buffered ingredients.

Both in association with the buffer and with any other surfaces which are exposed to the ingredients, the adhesion of ingredients to any surfaces of the device described herein may additionally be prevented by ejecting a fluid, such as compressed air, towards at least one surface which is exposed to the ingredients and/or the ingredients themselves. Consequently, at least one nozzle for ejecting such a fluid may be provided. In particular, the fluid, such as air, may be ejected as an air blade, in other words, along the blown surface of the wall. Particularly for the buffer tank, ejection of a fluid such as air, which can also be called aeration, has proven efficient in the form of (aeration) pads, i.e. the fluid being ejected over a certain surface. Further, any fouling, particularly of a feed-screw, may be removed "online", for example, by injecting a fluid, such as air, as a kind of "blade", e.g. over a length which substantially corresponds to the length of the screw casing, such as 400mm. The aeration blades and/or pad may, for example, be manufactured by Tridelta Siperm GmbH, Ostkirchstr. 177, 44287 Dortmund, Germany.

Further, the prevention of adhesion of chocolate ingredients to any exposed surfaces, may be aided by controlling the amount of ingredients delivered. This may, for example, be accomplished by at least one conveyor adapted to convey the ingredients, with which at least one weighing means for continuously weighing the ingredients is associated. Such a weighing means may, for example, be manufactured by Schenck Process GmbH, Pallaswiesenstrasse 100, 64293 Darmstadt, Germany under the trademark Multidos. Thus, the amount of ingredients delivered may be continuously determined and any parameters, such as the conveyor speed, may be continuously adjusted so as to achieve a predetermined target value. This, on the one hand, ensures a sufficient flow of ingredients and, on the other hand, prevents an excessive flow which may result in aggregation of the ingredients and, as a consequence, excessive adhesion and/or sticking of the ingredients.

As regards one or more of the conveyors involved, it may be advantageous in some situations, to provide a conveyor which is adapted to convey the ingredients in an upward direction. This, for example, allows the ingredients to be dropped into a hopper provided upstream of the feeding screw and, at the same time, withdrawing the ingredients from the lower portion of a buffer tank without requiring excessive space in the vertical direction.

### Brief description of the drawings

The invention will now be described with reference to exemplary embodiments thereof and with reference to the drawings, in which
Fig. 1 is a schematic view of a device for feeding chocolate ingredients to a continuous conche and making a chocolate mass;
Fig. 2 is a perspective view of the inside of a hopper having a flexible wall; and
Fig. 3 a perspective view of a hopper.

### Best mode for carrying out the invention

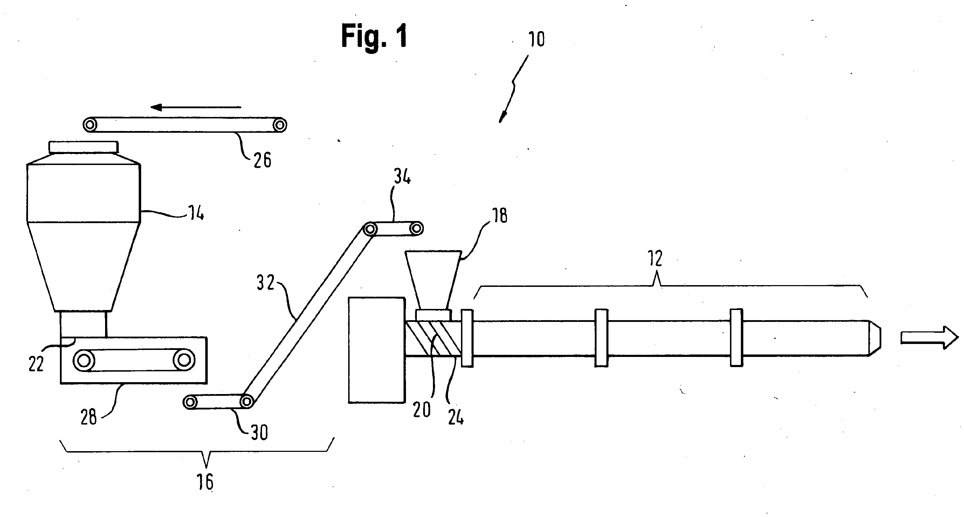

Fig. 1 shows the general layout of a device 10 for feeding chocolate ingredients to a continuous conche 12. In the embodiment shown, the device 10 comprises a buffer tank 14, a conveyer assembly 16, a hopper 18 and a feeding screw 20 for feeding the ingredients to the continuous conche 12. The ingredients, such as chocolate flakes, are delivered to the buffer tank 14 from one or more refiner (not shown) by one or more conveyors (26). The buffer tank 14 may have one or more agitators and/or nozzles for injecting a fluid such as compressed air in order to stir the content of the buffer tank 14. Through an outlet 22 of the buffer tank, the ingredients are removed from the buffer tank 14 and, in the embodiment shown, conveyed by a belt weigher 28 which can be considered a conveyor having weighing means in order to continuously weigh the ingredients removed from the buffer tank 14. The belt weigher 28 transfers, in the embodiment shown, the ingredients to a first substantially horizontal conveyor 30, from which the ingredients are taken by an inclined, upwards directed conveyor 32 and a second substantially horizontal conveyor 34 which delivers the ingredients to the hopper 18. As can be taken from the drawing, the inclination of conveyor 32 allows the buffer tank to be located at a relatively low position, despite the height of the hopper 18, and, therefore, avoids an excessive space consumption in the vertical direction. However, it is noted that conveyors 30 to 34, in particular the inclined conveyor 32 may be omitted if space consumption in the vertical direction is not an issue, so that the ingredients may more or less be conveyed in a horizontal direction from the outlet 22 of the buffer tank to a location above hopper 18. Further, in certain applications, one or more of the horizontal conveyors 30, 34 may be omitted. Actually, it is currently preferred to supply the ingredients from buffer tank 14 to hopper 18 by a single, substantially horizontal conveyor, such as conveyor 28, shown in the figure.

In the embodiment shown, the ingredients are dropped from conveyor 34 into hopper 18 and end up in a casing 24 from which they are withdrawn by a feeding screw 20, of which only the casing and not the inner screw is visible in Fig. 1. The feeding screw feeds the ingredients to the continuous conche 12. At the interface between the feeding screw 20 and the continuous conche 12 and/or along the continuous conche 12, further ingredients, such as cocoa liquor, flavour components, lecithin etc., may be added. The ingredients are mixed, heat is transferred to these as far as necessary along the continuous conche 12, and the necessary shearing forces are applied to the ingredients, so that chocolate mass leaves the continuous conche at the downstream (in Fig. 1, at right) end thereof. It is noted that the casing 24 may accommodate a drive of the feeding screw 20 and/or any screw contained in the continuous conche 12. Further, weighing means, such as one or more weighing cells may be present along one or more of conveyors 32 to 34 in addition to conveyor 16 in order to continuously weigh the ingredients delivered and adjust the conveyor speed and/or any other parameters as far as necessary.

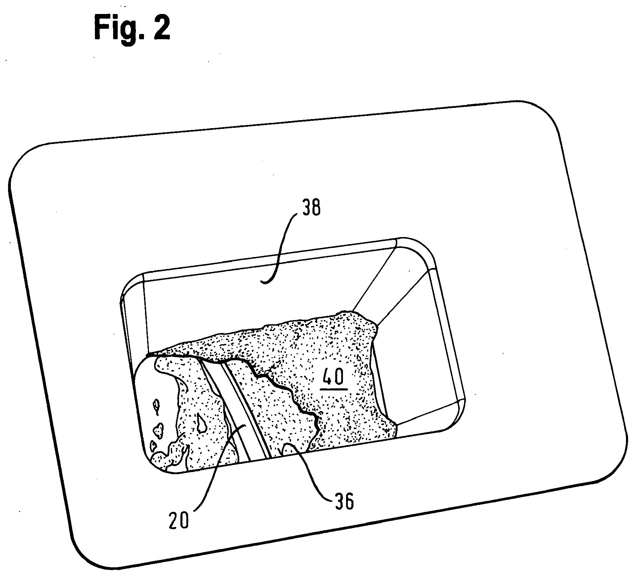

Fig. 2 shows an inside view of the hopper 18, as viewed essentially from above, so that an opening 36 of the hopper and part of the screw 20 are visible. As can be seen in the drawing, any walls 38 forming the opening 36 are made from flexible material and are, in the embodiment shown, formed inflatable. In the embodiment shown, the flexible material even extends to the lower part of the inclined walls of the hopper. By means of inflating means (not shown) the walls 38 may be inflated, so that they move, in the embodiment shown, towards each other and/or deform so as to form one or more bulges extending into the opening 36.

Fig. 2 also shows a so-called bridge 40, which builds across the opening 36 by, firstly, chocolate ingredients adhering to the walls 38, further ingredients adhering to the ingredients sticking to the walls, and more and more ingredients agglomerating and, finally, building a continuous bridge. If this process continues the entire opening 36 will be blocked. Through the movement and/or deformation of at least one of the walls 38, mechanical energy is applied to such a bridge 40 in a relatively simple but efficient manner, so that the bridge is destroyed and the described adhering can be prevented, and the flow of ingredients to the feeding screw 20 continues.

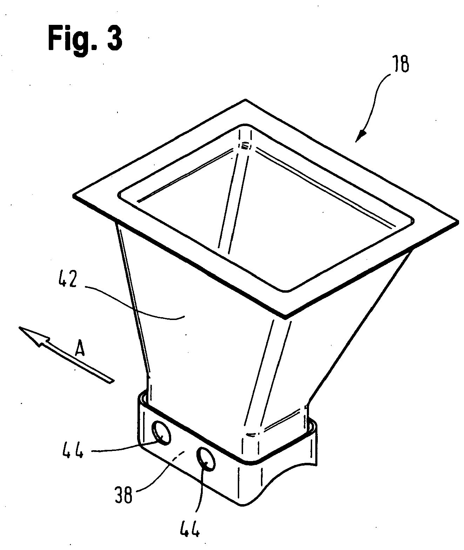

As can be taken from Fig. 3, the hopper 18 may have a generally tapered shape with a substantially rectangular upper opening, and also a substantially rectangular lower opening which can already be seen in Fig. 2. One or two walls 42, located between the upper and the lower opening, may be substantially vertical. This also applies to walls, such as a wall 38, located adjacent, particularly immediately above the lower opening. In particular, all of the wall adjacent the lower opening may be substantially vertical and may have, as shown in Fig. 3, a type of double wall structure. For example, there may be inner walls which are substantially continuous with the tapered walls and which may be flexible. Further, the outer walls may have one or more openings shown at 44 for allowing one or more pistons to pass through the openings 44 of the outer walls so as to abut the inner walls. Thus, when one or more pistons are moved towards the opening of the hopper, the engaged inner walls are at least slightly moved towards the opening, so that any bridges, such as shown at 40 in Fig. 2, are destroyed. In the embodiment shown, at least one wall 38, which is substantially parallel to a screw direction A and at least a wall, which is substantially perpendicular to the screw direction A and at the downstream end of the hopper, i.e. not visible in Fig. 3, is flexible to realize the above-described effects, at the downstream end of the hopper. It has been found by the inventors that the buildups and bridges are particularly critical in that area.

## Claims

1. A device (10) for continuously feeding chocolate ingredients, such as flakes, to a continuous conche (12), the device (10) comprising a hopper (18) having at least one flexible wall (38) that is movable and/or deformable to prevent adhesion of the ingredients to surfaces of the device (10) exposed to the ingredients, wherein the at least one flexible wall (38) is adapted to be moved/deformed by wall inflating means and is located at a downstream end of the hopper, and wherein the at least one flexible wall is substantially perpendicular to a feeding direction which is present downstream of the hopper.

2. The device of claim 1, further comprising at least one casing (24), in which at least one screw is accommodated, containing the at least one flexible wall.

3. The device of claim 1 or 2, wherein at least one surface exposed to the ingredients is non-adhesive to cold or warm chocolate ingredients.

4. The device of claim 3, **characterized in that** at least one non-adhesive surface has a surface roughness (Ra) of about 1,0 µm or less.

5. The device of claim 3 or 4, **characterized in that** at least one non-adhesive surface is a ceramic and/or lacquered and/or teflonized and/or electroplated surface.

6. The device of any of the preceding claims, having at least one screw (20) with a ratio of a pitch length (L) to an outer diameter (D) of about 3 to about 1, in particular about 1.

7. The device of any of the preceding claims, further having at least one buffer tank (14).

8. The device of claim 7, wherein at least one agitator means is provided in the buffer tank (14).

9. The device of any of the preceding claims, having at least one nozzle for ejecting a fluid, such as compressed air, directed to at least one surface exposed to the ingredients and/or ingredients.

10. The device of any of any of the preceding claims, further having at least one conveyor (28) adapted to convey the ingredients with which at least one weighing means for continuously weighing the ingredients is associated.

11. The device of any of the preceding claims, further having a conveyor (32) adapted to convey the ingredients in an upward direction.

12. A system for producing a chocolate mass having at least one device of any of the preceding claims and at least one continuous conche.

13. A process for continuously feeding chocolate ingredients, such as flakes, to a continuous conche, in which adhesion of the ingredients to surfaces of a hopper (18) that are exposed to the ingredients, is continuously prevented by at least one flexible wall (38) of the hopper (18) that is movable and/or deformable, wherein the at least one flexible wall (38) is adapted to be movable and/or deformable by wall inflating means at the downstream end of the hopper (18) and wherein the at least one movable and/or deformable wall is located at a downstream end of a hopper and is substantially perpendicular to a feeding direction which is present downstream of the hopper.

14. The process of claim 13, wherein the at least one movable and/or deformable wall exposed to the ingredients is regularly moved and/or deformed.

15. The process of one of claims 13 to 14, wherein the ingredients are buffered.

16. The process of any of claims 13 to 15, wherein a fluid, such as compressed air, is regularly ejected towards at least one surface exposed to the ingredients.

17. The process of any of claims 13 to 16, wherein the ingredients are conveyed and continuously weighed during conveying thereof, and wherein the conveying speed is adjusted on the basis of the result of weighing.

18. The process of any of claims 13 to 17, wherein the ingredients are conveyed in an upward direction.

19. A process for producing a chocolate mass incorporating the process of any of claims 13 to 18 and a continuous conching process.

## Patentansprüche

1. Vorrichtung (10) zum kontinuierlichen Zuführen von Schokoladenbestandteilen, wie Flocken, zu einer kontinuierlich laufenden Conche (12), wobei die Vorrichtung (10) einen Trichter (18) mit mindestens einer flexiblen Wand (38) umfasst, die beweglich und/oder verformbar ist, um ein Anhaften der Bestandteile an Oberflächen der Vorrichtung (10), die den Bestandteilen ausgesetzt sind, zu verhindern, wobei die mindestens eine flexible Wand (38) so konzipiert ist, dass sie durch Mittel zum Aufblasen der Wand bewegt/verformt wird, und an einem nachgelagerten Ende des Trichters angeordnet ist, und wobei die mindestens eine flexible Wand im Wesentlichen senkrecht zu einer Zuführrichtung steht, die dem Trichter nachgelagert vorhanden ist.

2. Vorrichtung nach Anspruch 1, ferner umfassend mindestens ein Gehäuse (24), in dem mindestens eine Schnecke aufgenommen ist, welche mindestens eine flexible Wand hat.

3. Vorrichtung nach Anspruch 1 oder 2, wobei mindestens eine Oberfläche, die den Bestandteilen ausgesetzt ist, nicht haftend gegenüber kalten oder warmen Schokoladenbestandteilen ist.

4. Vorrichtung nach Anspruch 3, **dadurch gekennzeichnet, dass** mindestens eine nicht haftende Oberfläche eine Oberflächenrauigkeit (Ra) von etwa 1,0 µm oder weniger aufweist.

5. Vorrichtung nach Anspruch 3 oder 4, **dadurch gekennzeichnet, dass** mindestens eine nicht haftende Oberfläche eine keramische und/oder lackierte und/oder teflonisierte und/oder galvanisierte Oberfläche ist.

6. Vorrichtung nach einem der vorstehenden Ansprüche, aufweisend mindestens eine Schnecke (20) mit einem Verhältnis einer Teilungslänge (L) zu einem Außendurchmesser (D) von etwa 3 bis etwa 1, insbesondere etwa 1.

7. Vorrichtung nach einem der vorstehenden Ansprüche, ferner aufweisend mindestens einen Puffertank (14).

8. Vorrichtung nach Anspruch 7, wobei mindestens ein Rührmittel in dem Puffertank (14) bereitgestellt ist.

9. Vorrichtung nach einem der vorstehenden Ansprüche, aufweisend mindestens eine Düse zum Ausstoßen eines Fluids, wie Druckluft, die auf mindestens eine Oberfläche gerichtet ist, die den Bestandteilen und/oder Bestandteilen ausgesetzt ist.

10. Vorrichtung nach einem der vorstehenden Ansprüche, ferner aufweisend mindestens eine zum Befördern der Bestandteile konzipierte Fördervorrichtung (28), dem mindestens ein Wiegemittel zum kontinuierlichen Wiegen der Bestandteile zugehörig ist.

11. Vorrichtung nach einem der vorstehenden Ansprüche, ferner aufweisend eine Fördervorrichtung (32), die dazu konzipiert ist, die Bestandteile in einer Aufwärtsrichtung zu befördern.

12. System zur Herstellung einer Schokoladenmasse, aufweisend mindestens eine Vorrichtung nach einem der vorstehenden Ansprüche und mindestens eine kontinuierlich laufende Conche.

13. Verfahren zum kontinuierlichen Zuführen von Schokoladenbestandteilen, wie Flocken, zu einer kontinuierlich laufenden Conche, bei dem ein Anhaften der Bestandteile an Oberflächen eines Trichters (18), die den Bestandteilen ausgesetzt sind, kontinuierlich durch mindestens eine flexible Wand (38) des Trichters (18) verhindert wird, die beweglich und/oder verformbar ist, wobei die mindestens eine flexible Wand (38) so konzipiert ist, dass sie durch Mittel zum Aufblasen der Wand am nachgelagerten Ende des Trichters (18) beweglich und/oder verformbar ist, und wobei die mindestens eine bewegliche und/oder verformbare Wand an einem nachgelagerten Ende eines Trichters angeordnet ist und im Wesentlichen senkrecht zu einer Zuführrichtung ist, die dem Trichter nachgelagert vorhanden ist.

14. Verfahren nach Anspruch 13, wobei die mindestens eine bewegliche und/oder verformbare Wand, die den Bestandteilen ausgesetzt ist, regelmäßig bewegt und/oder verformt wird.

15. Verfahren nach einem der Ansprüche 13 bis 14, wobei die Bestandteile gepuffert sind.

16. Verfahren nach einem der Ansprüche 13 bis 15, wobei ein Fluid, wie Druckluft, regelmäßig zu mindestens einer Oberfläche hin ausgestoßen wird, die den Bestandteilen ausgesetzt ist.

17. Verfahren nach einem der Ansprüche 13 bis 16, wobei die Bestandteile während ihrer Beförderung befördert und kontinuierlich gewogen werden, und wobei die Fördergeschwindigkeit auf der Basis des Ergebnisses des Wiegens eingestellt wird.

18. Verfahren nach einem der Ansprüche 13 bis 17, wobei die Bestandteile in einer Aufwärtsrichtung befördert werden.

19. Verfahren zur Herstellung einer Schokoladenmasse, umfassend das Verfahren nach einem der Ansprüche 13 bis 18 und einen kontinuierlichen Conchierprozess.

## Revendications

1. Dispositif (10) pour alimenter en continu des ingrédients en chocolat, tels que des flocons, dans une conche continue (12), le dispositif (10) comprenant une trémie (18) ayant au moins une paroi flexible (38) étant mobile et/ou déformable pour empêcher l'adhérence des ingrédients aux surfaces du dispositif (10) exposées aux ingrédients, dans lequel la ou les parois flexibles (38) sont aptes à être déplacées/déformées par des moyens de gonflement de la paroi et situées à une extrémité en aval de la trémie et dans lequel la ou les parois flexibles sont sensiblement perpendiculaires à une direction d'alimentation qui est présente en aval de la trémie.

2. Dispositif selon la revendication 1, comprenant en outre au moins un boîtier (24), dans lequel au moins une vis est logée, contenant la au moins une paroi flexible.

3. Dispositif selon la revendication 1 ou 2, dans lequel au moins une surface exposée aux ingrédients n'est pas adhésive à des ingrédients de chocolat froid ou chaud.

4. Dispositif selon la revendication 3, **caractérisé en ce qu'**au moins une surface non adhésive a une rugosité de surface (Ra) d'environ 1,0 µm ou moins.

5. Dispositif selon la revendication 3 ou 4, **caractérisé en ce qu'**au moins une surface non adhésive est une surface céramique et/ou laquée et/ou téflonisée et/ou galvanisée.

6. Dispositif selon l'une quelconque des revendications précédentes, ayant au moins une vis (20) avec un rapport d'une longueur de pas (L) à un diamètre extérieur (D) d'environ 3 à environ 1, en particulier d'environ 1.

7. Dispositif selon l'une quelconque des revendications précédentes, comportant en outre au moins un bac tampon (14).

8. Dispositif selon la revendication 7, dans lequel au moins un moyen d'agitateur est prévu dans le réservoir tampon (14).

9. Dispositif selon l'une quelconque des revendications précédentes, ayant au moins une buse pour éjecter un fluide, tel que de l'air comprimé, dirigée vers au moins une surface exposée aux ingrédients et/ou vers les ingrédients.

10. Dispositif selon l'une quelconque des revendications précédentes, comprenant en outre au moins un transporteur (28) apte à transporter les ingrédients avec lequel au moins un moyen de pesage pour peser en continu les ingrédients est associé.

11. Dispositif selon l'une quelconque des revendications précédentes, comportant en outre un transporteur (32) apte à transporter les ingrédients dans une direction ascendante.

12. Système de production d'une masse de chocolat comportant au moins un dispositif selon l'une quelconque des revendications précédentes et au moins une conche continue.

13. Procédé pour alimenter en continu des ingrédients en chocolat, tels que des flocons, dans une conche continue, dans lequel l'adhérence des ingrédients aux surfaces d'une trémie (18) exposées aux ingrédients, est empêchée en permanence par au moins une paroi flexible (38) de la trémie (18) qui est mobile et/ou déformable, dans lequel la au moins une paroi flexible (38) est adaptée pour être mobile et/ou déformable par des moyens de gonflement de la paroi au niveau de l'extrémité en aval de la trémie (18) et dans lequel la au moins une paroi mobile et/ou déformable est située à une extrémité en aval d'une trémie et est sensiblement perpendiculaire à une direction d'alimentation qui est présente en aval de la trémie.

14. Procédé selon la revendication 13, dans lequel la au moins une paroi mobile et/ou déformable exposée aux ingrédients est régulièrement déplacée et/ou déformée.

15. Procédé selon l'une des revendications 13 à 14, dans lequel les ingrédients sont tamponnés.

16. Procédé selon l'une quelconque des revendications 13 à 15, dans lequel un fluide, tel que de l'air comprimé, est régulièrement éjecté vers au moins une surface exposée aux ingrédients.

17. Procédé selon l'une quelconque des revendications 13 à 16, dans lequel les ingrédients sont transportés et pesés en continu pendant leur transport et dans lequel la vitesse de transport est ajustée sur la base du résultat de la pesée.

18. Procédé selon l'une quelconque des revendications 13 à 17, dans lequel les ingrédients sont transportés dans une direction ascendante.

19. Procédé de production d'une masse de chocolat incorporant le procédé selon l'une quelconque des revendications 13 à 18 et un procédé de conchage continu.
